# EUROPÄISCHE PATENTSCHRIFT

(11) **EP 0 389 831 B1**
(45) Veröffentlichungstag und Bekanntmachung des Hinweises auf die Patenterteilung: **25.08.1993**
(21) Anmeldenummer: 90104204.4
(22) Anmeldetag: 05.03.1990
(51) Int. Cl.: F16L 3/22, B65D 63/10

(54) **Vorrichtung zum Binden langgestreckter Gegenstände**
Device for binding elongated objects
Dispositif pour ligaturer des éléments allongés

(30) Priorität: 28.03.1989 DE 8903806 U
(43) Veröffentlichungstag der Anmeldung: 03.10.1990
(73) Patentinhaber: Paul Hellermann GmbH, 25421 Pinneberg (DE)
(72) Erfinder: Köster, Lothar, Dr.-Ing., D-2000 Hamburg 80 (DE); Uramowsky, Zbigniew, Dipl.-Ing., D-2000 Hamburg 74 (DE); Masler, Gerhard, D-2081 Hemdingen (DE)
(74) Vertreter: Glawe, Delfs, Moll & Partner

(56) Entgegenhaltungen:
- EP-A- 0 281 968
- US-A- 3 875 620

## Beschreibung

Die Erfindung bezieht sich auf eine Vorrichtung zum Binden langgestreckter Gegenstände, insbesondere von Kabeln, Schläuchen und dergleichen. Sie befaßt sich mit der Verbesserung einer bekannten Vorrichtung (EP-A 0 281 968), die einen Befestigungsteil zum Befestigen der Vorrichtung an einer Montagefläche, ein einstückig mit dem Befestigungsteil verbundenes Band und einen gleichfalls einstückig mit dem Befestigungsteil verbundenen Schließteil zum Halten des gespannten Bandes umfaßt. Der Befestigungsteil hat eine Hochachse, die etwa lotrecht zu der Montagefläche steht, auf der er zu befestigen ist. Er weist ferner eine ausgeprägte Unter- und Oberseite auf, wobei diese festgelegt sind durch die Art der an dem Befestigungsteil vorgesehenen Befestigungsorgane. Dabei handelt es sich beispielsweise um eine Bohrung mit Rastklauen zum Zusammenwirken mit einem an dem Konstruktionsteil vorgesehenen Schweißbolzen. Einstückig ist mit einer Seite des Befestigungsteils ein Ende des Bands verbunden. Der Begriff Seite ist in diesem Zusammenhang auf die Hochachse des Befestigungsteils in dem Sinne zu beziehen, daß das Band an einem Oberflächenbereich des Befestigungsteils angeordnet ist, der zu der Hochachse seitlich versetzt ist. Der Schließteil ist auf der dem Befestigungspunkt des Bands gegenüberliegenden Seite des Befestigungsteils einstückig mit diesem verbunden, wobei es nicht erforderlich ist, daß die Verbindungslinie zwischen den Befestigungspunkten des Bandes und des Schließteils lotrecht zu der Hochachse steht. Das Band ist als Gliederband ausgebildet mit einer Vielzahl von gleichartigen, elastisch nachgiebigen Bandgliedern, die wenigstens ein die Längskräfte übertragendes Strangelement zwischen zwei Querstegen aufweisen. Vorzugsweise sind zwei symmetrisch angeordnete Strangelemente vorgesehen, so daß jedes Bandglied ein geschlossenes Gebilde ist, dessen Enden (in Bandrichtung gesehen) von zwei Querstegen gebildet sind, die gleichzeitig Teil jedes benachbarten Bandglieds sein können. Sie können auch an einem oder mehreren Punkten miteinander verbunden sein. Der Schließteil ragt langgestreckt fingerartig von dem Befestigungsteil schräg aufwärts, weg von der Hochachse und der Seite, an der das Band befestigt ist. Er hat in der dem Befestigungsteil, dem Band und dem Schließteil gemeinsamen Ebene eine solche Querabmessung, daß ihm ein Bandglied wenigstens unter elatischer Aufweitung überstreifbar ist. An seiner Unterseite befindet sich in Form einer Vertiefung oder Querrinne eine Halteaufnahme für einen Quersteg des übergestreiften Bandglieds, deren Abstand von dem freien Ende des Schließteils wesentlich größer als die lichte Weite des Bandglieds ist.

Die Vorrichtung ist im allgemeinen so angeordnet, daß das Band von der überwiegenden Betriebskraft in einer Richtung beansprucht wird, die zu derjenigen Seite des Befestigungsteils drängt, an der das Band befestigt ist. Das bedeutet, daß das dem Schließteil übergestreifte Bandglied in einer Richtung quer zu dem Schließteil oder sogar zu dessen mit dem Befestigungsteil verbundenen Wurzel hin gezogen wird. Jedoch muß - beispielsweise im Automobilbau - auch mit Kräften gerechnet werden, die zu derjenigen Seite hin gerichtet sind, an der der Schließteil befestigt ist, und die dazu neigen, daß übergestreifte Bandglied von dem Schließteil abzuziehen. Bei der bekannten Vorrichtung kann es unter solchen Kräften zum Lösen des dem Schließteil übergestreiften Bandglieds kommen, sofern die Längselastizität des Bands, die für das Überstreifen über den Schließteil erforderlich ist, nicht stark beschränkt ist. Jedoch kann es erwünscht sein, das Band in Längsrichtung elastisch stark nachgiebig zu machen, damit die Bandspannung dem unterschiedlichen Umfang der zu bindenden Gegenstände ohne die Gefahr lockerer Bindung angepaßt werden kann und damit das Bandmaterial materialsparend mit groben Raststufen (Gliederlänge) ausgebildet werden kann, ohne daß dadurch unerwünscht große Spannungsstufen verursacht werden.

Der Erfindung liegt daher die Aufgabe zugrunde, eine Vorrichtung der oben beschriebenen Art zu schaffen, die beträchtliche Längsnachgiebigkeit des Bandes mit Schließsicherheit verbindet.

Die erfindungsgemäße Lösung liegt in der Kombination der Merkmale des Anspruchs 1.

Demnach beruht die Längsnachgiebigkeit des Bandes darauf, daß das Strangelement bzw. die Strangelemente der Bandglieder zumindest teilweise einen von der Längsrichtung abweichenden, unter Längskräften durch Biegung sich frei streckenden Verlauf hat/haben. Die Bandglieder haben zweckmäßigerweise eine kreisförmige bis rautenförmige Gestalt, mit allen denkbaren Zwischenstufen, bspw. einer querovalen Form. Zweckmäßig kann es auch sein, wenn die Bandglieder dreiecksförmig sind mit im Mittelbereich des Querstegs eines Bandglieds angreifenden Strangelementen des folgenden Bandglieds. Die Wirkungsweise der Erfindung beruht darauf, daß die Strangelemente der Bandglieder sich unter dem Längszug des Bands in solcher Weise verformen, daß sie sich strecken.

Zwar kann es vorteilhaft sein, wenn sämtliche Bandglieder gleich ausgeführt sind. Jedoch ist dies nicht erforderlich. Beispielsweise können die Bandglieder in einem dem Befestigungsende nahen Abschnitt des Bandes eine größere Elastizität aufweisen als in einem ferneren Abschnitt. Das führt dazu, daß bei kleinem Bindeumfang schon eine verhältnismäßig große Bandnachgiebigkeit zur Verfügung steht, die bei zunehmendem Bindeumfang sich nicht oder nicht wesentlich zu vergrößern braucht. Es kann auch vorgesehen sein, daß die Nachgiebigkeit der Bandglieder vom Befestigungsende zum freien Ende des Bandes hin stetig abnimmt.

Zwar ist es bekannt (US-A 3 875 620), derartige Konfigurationen zur Bildung eines längsnachgiebigen Bandes zu nutzen. Jedoch ist dabei vorgesehen, daß die einzelnen Bandglieder zusätzlich durch ausschließlich in Längsrichtung verlaufende Stränge miteinander verbunden sind, die die biegsamen Strangelemente überbrücken und mit Sollreißstellen versehen sind. Das bekannte Band soll normalerweise in Längsrichtung nicht nachgiebig sein aber nachgeben können, wenn beispielsweise das Wachstum eines mit diesem Band befestigten Weinstocks dies erforderlich macht.

Der erfindungsgemäße Schließteil unterscheidet sich von demjenigen der eingangs beschriebenen, bekannten Vorrichtung dadurch, daß auf seiner Oberseite gegenüber der Halteaufnahme für den einen Quersteg des übergestreifen Bandglieds eine zweite Aufnahme als Sicherungsaufnahme für den zweiten Quersteg dieses Bandglieds gebildet ist, die verhindert, daß dieses Bandglied sich in bezug auf die Halteaufnahme in Löserichtung bewegt. Mit anderen Worten weist die Sicherungsaufnahme mit dem Quersteg zusammenwirkende Flächen auf, die quer zu den Kräften verlaufen, die diesen Quersteg in Löserichtung beanspruchen könnten. Da es sich bei diesen Kräften um diejenigen handelt, die von der Seite des Befestigungsteils, an der das Band befestigt ist, zu der Seite gerichtet sind, an der der Schließteil befestigt ist, verlaufen diese Sicherungsflächen etwa parallel zur Hochachse des Befestigungsteils.

Schließlich ist es nach der Erfindung zweckmäßig, wenn der Haken außer der Halteaufnahme für die endgültige Positionierung des Bandes eine Halteaufnahme für die vorläufige Positionierung aufweist.

Die Erfindung wird im folgenden näher unter Bezugnahme auf die Zeichnung erläutert, die vorteilhafte Ausführungsbeispiele veranschaulicht. Es zeigen:
- Fig. 1 - 3: Ansichten dreier Bindevorrichtungen,
- Fig.4: eine Schnittansicht der Vorrichtung im Bindezustand,
- Fig. 5 - 9: verschiedene Bandausführungen in der Draufsicht in vergrößertem Maßstab,
- Fig. 10: einen Längsschnitt durch das Ausführungsbeispiel der Fig. 8 und
- Fig. 11 - 12: Schnittansichten des Schließ- und Halteteils.

Die Vorrichtung besteht aus dem Halteteil 1, dem Schließteil 2 und dem Band 3 einstückig aus thermoplastischem, zähelastischem Kunststoff, bspw. Polyamid. Der Halteteil dient dazu, die Bindevorrichtung samt den davon gehaltenen Gegenständen an einer Montagefläche zu befestigen. In Fig. 4 ist vorausgesetzt, daß an der Montagefläche 4 ein sogenannter Schweißbolzen 5 angeordnet ist und daß der Halteteil 1 als bekannte Schweißbolzenaufnahme ausgeführt ist. Er könnte auch als Spreizanker zur Befestigung in einer Plattenbohrung oder als Schraubsockel oder dergleichen ausgeführt sein. Schließlich könnte der Halteteil auch gänzlich fehlen, bzw. auf ein Element reduziert sein, das zum Tragen des Schließteils 2 geeignet ist. Jedenfalls ist durch die Art der Befestigung deutlich festgelegt, welche Seite des Befestigungsteils als Unterseite bzw. Oberseite zu betrachten ist. Festgelegt ist dadurch auch seine Hochachse 9.

Der Schließteil 2 ragt langgestreckt fingerartig unter einem Winkel von etwa 45° gegenüber der Hochachse von dem Befestigungsteil ab. Er ist - allgemein gesprochen - als Haken ausgebildet, in den das Band in der weiter unten beschriebenen Weise eingehakt wird.

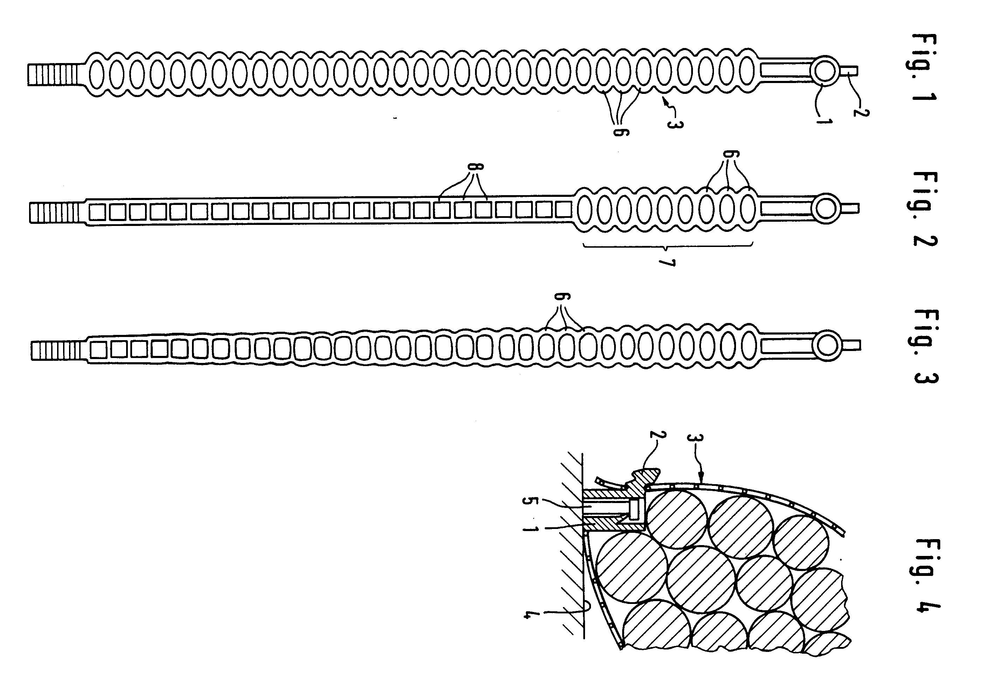

Das Band besteht aus einer Vielzahl von Bandgliedern 6, die in der Ausführung gemäß Fig. 1 sämtlich gleich ausgeführt sind. Sie sind aufgrund ihrer weiter unten zu erläuternden Form in Längsrichtung nachgiebig, so daß das Band ingesamt eine verhältnismäßig große Nachgiebigkeit aufweist.

In der Ausführung gemäß Fig. 2 ist nur ein Abschnitt 7 aus den Bandgliedern 6 großer Nachgiebigkeit hergestellt, wobei dieser Abschnitt 7 nahe dem Halte- bzw. Schließteil 1, 2 angeordnet ist. Der Rest des Bandes wird von Bandgliedern 8 gebildet, die herkömmlich ausgeführt sind.

In der Ausführung gemäß Fig. 3 nimmt die Breite und Längsverformbarkeit der Bandglieder 6 kontinuierlich von dem mit dem Halteteil 1 verbundenen Ende bis zum freien Ende des Bands 3 ab. Entsprechend vermindert sich auch die Längsnachgiebigkeit der Bandglieder. Für zu bindende Gegenstände mit geringem Umschlingungsumfang steht nahezu die vollständige Nachgiebigkeit zur Verfügung, während sie mit zunehmendem Umschlingungsumfang nur noch unterproportional wächst. Desgleichen vermindert sich mit zunehmendem Umschlingungsumfang die Nachgiebigkeit des jeweils mit dem Halteteil 2 zusammenwirkenden Bandglieds, wobei die Verschlußfestigkeit mit der aufzunehmenden Last wächst.

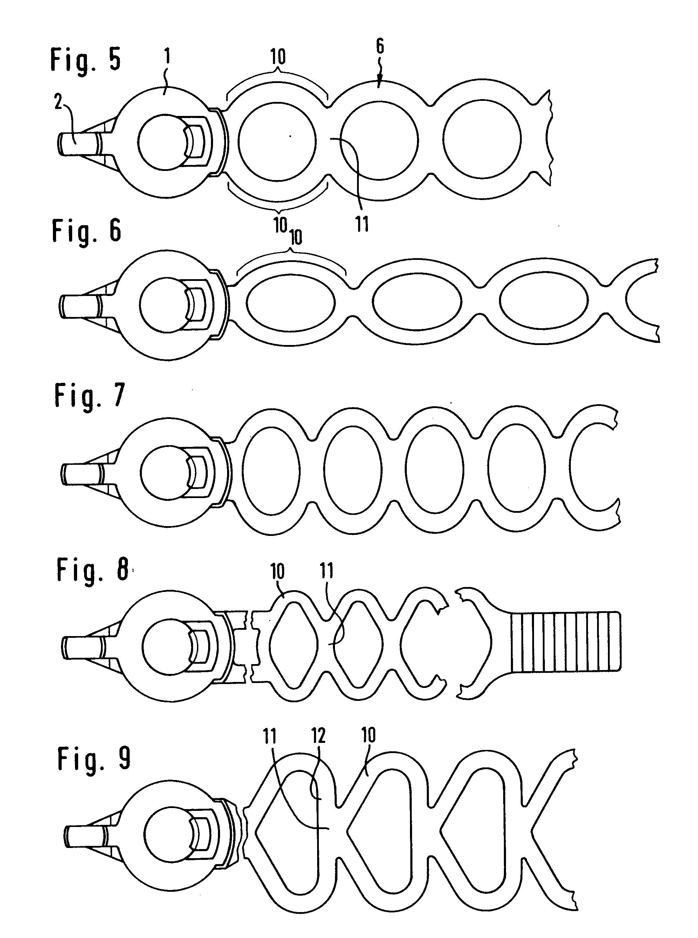

Gemäß Fig. 5 sind die Bandglieder 6 kreisförmig ausgeführt. Die an der Längskraftübertragung beteiligten, bogenförmigen Strangelemente 10 jedes Bandglieds sind durch Querstege 11 miteinander verbunden. Wird das Band einer Längszugkraft unterworfen, so können die Bandglieder 6 sich so verformen, wie dies bspw. in Fig. 6 angedeutet ist. Die dargestellte Formänderung kommt dabei im wesentlichen ausschließlich durch Biegung der Strangelemente 10 zustande.

Wenn die Bandglieder 6 gemäß Fig. 7 eine größere Quer- als Längsabmessung aufweisen, steht im Vergleich mit Fig. 5 eine noch größere Verformungsstrecke zur Verfügung. Dasselbe gilt für die Form gemäß Fig. 8, die einem Trapez angenähert ist. Man erkennt dabei, daß die Querstege 11 je nach Form der Strangelemente 10 recht kurz ausfallen können, bis hin zur Reduktion auf den Verbindungspunkt zweier aufeinanderfolgender Bandglieder.

Fig. 9 zeigt ein Ausführungsbeispiel von etwa dreiecksförmig gestalteten Bandglieder, deren Basisteil 12 teils an der Längskraftübertragung beteiligt ist und deshalb als Teil des Strangelements und teils als Quersteg anzusprechen ist. Für die Praxis spielt es keine Rolle, ob der Quersteg groß und eigenständig ausgebildet ist, sofern er nur der Schließfunktion im Zusammenwirken mit dem Schließteil 2 zu genügen vermag. Für die Erfindung kommt es mehr auf die Strangelemente 10 an und die durch deren Biegbarkeit begründete Längsdehnbarkeit.

Die Längsdehnbarkeit soll zum einen die Möglichkeit geben, trotz verhältnismäßig grober Raststufen des Bandes die gewünschte Haltespannung feinfühlig wählen zu können. Zum anderen gibt sie die Möglichkeit, trotz Verwendung eines vergleichsweise zähen und sogar harten Kunststoffmaterials eine weiche, schonende Spannung auf die zu bindenden Gegenstände auszuüben.

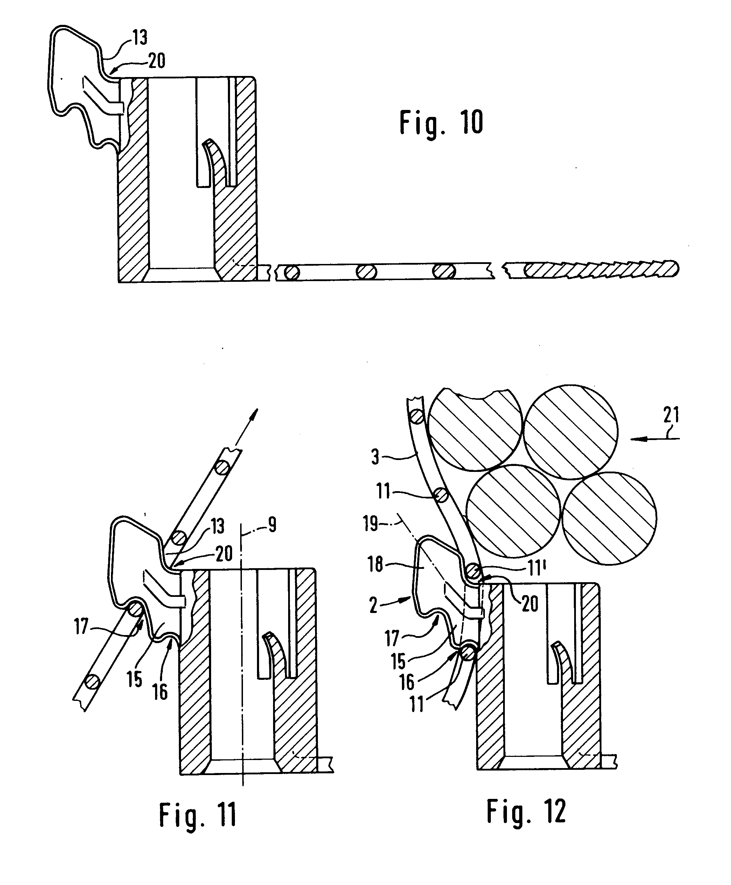

In den Fig. 10 - 12 erkennt man Einzelheiten des Schließteils und seines Zusammenwirkens mit dem Band. Er weist einen Haken 15 mit einer Halteaufnahme 16 für die endgültige Positionierung des Bandes 3 auf, deren Verwendung in Fig. 12 veranschaulicht ist. Der Halteaufnahme 16 für die endgültige Positionierung ist eine Halteaufnahme 17 für die vorläufige Positionierung des Bandes 3 vorgeschaltet, deren Benutzung man in Fig. 11 erkennt.

Der Schließteil 2 umfaßt ferner eine Nase 18, die sich etwa in der Richtung 19 erstreckt. Er hat in der Zeichenebene quer zu dieser Richtung 19 seine geringste Ausdehnung, die nicht oder nur so wenig größer ist als die lichte Längserstreckung eines Bandglieds 6, daß dies in der Richtung 19 übergestreift werden kann, um zunächst in die vorläufige Positionierung gemäß Fig. 11 zu kommen und später in die endgültige Positionierung gemäß Fig. 12 überführt zu werden.

Der Schließteil 2 weist auf der der Halteaufnahme 16 gegenüberliegenden Seite eine Sicherungsaufnahme 20 auf, die von der Halteaufnahme 16 etwa so weit entfernt ist wie zwei Querstege 11, die an der Bildung eines und desselben Bandglieds beteiligt sind. In der endgültigen Positionierung legt sich daher ein Quersteg 11' in die Aufnahme 20, wodurch der in der Halteaufnahme 16 befindliche Quersteg 11 daran gehindert wird zu entweichen. Diese Sicherung bewährt sich insbesondere auch dann, wenn Kräfte im Lösesinne in Richtung 19 oder in Richtung des Pfeils 21 wirken, weil die Sicherungsaufnahme 20 über Flächen mit dem Quersteg 11' zusammenwirkt, die quer zur Richtung dieser Kräfte verlaufen. Der Abstand der Aufnahmen 16 und 20 kann in der Praxis etwas größer als der lichte Abstand zweier benachbarter Querstege gewählt werden, nämlich etwa so groß wie der lichte Abstand, der sich bei der Dehnung unter der maximal zu erwartenden Kraft ergibt.

## Patentansprüche

1. Vorrichtung zum Binden langgestreckter Gegenstände mit einem Befestigungsteil (1) zum Befestigen der Vorrichtung an einer Montagefläche (4), der eine etwa lotrecht zu der Montagefläche (4) stehende Hochachse (9) aufweist, einem mit dem Befestigungsteil an dessen einer Seite fest verbundenen Band (3) und einem mit dem Befestigungsteil (1) an dessen anderer Seite fest verbundenen Schließteil (2) zum Halten des freien Endes des um den zu bindenden Gegenstand gelegten Bandes (3), wobei das Band eine Vielzahl gleichartiger, elatischer, in Längsrichtung nachgiebiger Bandglieder (6) umfaßt, die wenigstens ein die Längskräfte übertragendes Strangelement (10) zwischen zwei Querstegen (11) aufweisen, und wobei der Schließteil (2) sich langgestreckt schräg aufwärts von der Hochachse des Befestigungsteils (1) weg erstreckt und in der dem Befestigungsteil, dem Band und dem Schließteil gemeinsamen Ebene eine solche Querabmessung hat, daß ihm ein Bandglied unter elastischer Aufweitung überstreifbar ist und an seiner Unterseite eine Halteaufnahme (16) für einen Quersteg (11) eines übergestreiften Bandglieds aufweist, deren Abstand von dem freien Ende des Schließteils größer als die lichte Weite des Bandglieds ist, dadurch gekennzeichnet, daß auf der der Halteaufnahme (16) gegenüberliegenden Seite des Schließteils (2) eine Sicherungsaufnahme (20) für den zweiten Quersteg (11') des übergestreiften Bandglieds vorgesehen ist, die von der Halteaufnahme (16) etwa so weit entfernt ist, wie die beiden Querstege (11, 11') voneinander und die den darin befindlichen Quersteg (11') gegenüber einer Kraft abstützt, die auf das Band in einer Richtung (21') einwirkt, die von der Seite des Befestigungsteils (1), an der das Band (3) befestigt ist, zu der Seite verläuft, an der der Schließteil (2) befestigt ist.

2. Vorrichtung nach Anspruch 1, dadurch gekennzeichnet, daß die Sicherungsaufnahme (20) eine mit dem Quersteg (11') zusammenwirkende Fläche (13) aufweist, die etwa parallel zur Hochachse (9) des Befestigungsteils (1) verläuft.

3. Vorrichtung nach Anspruch 1 oder 2, dadurch gekennzeichnet, daß das Strangelement (10) der Bandglieder (6) zumindest teilweise einen von der Längsrichtung abweichenden, unter Längskräften durch Biegung sich frei streckenden Verlauf hat.

4. Vorrichtung nach einem der Ansprüche 1 bis 3, dadurch gekennzeichnet, daß die Bandglieder (6) zwei symmetrische Strangelemente aufweisen.

5. Vorrichtung nach Anspruch 4, dadurch gekennzeichnet, daß die Bandglieder (6) kreis- bis rautenförmig ausgebildet sind.

6. Vorrichtung nach Anspruch 5, dadurch gekennzeichnet, daß die Bandglieder (6) eine längere Quer- als Längsachse aufweisen.

7. Vorrichtung nach Anspruch 4, dadurch gekennzeichnet, daß die Bandglieder (6) dreiecksförmig mit im Mittelbereich des Querstegs (12) eines Bandglieds (6) angreifenden Strangelementen (10) des benachbarten Bandglieds sind.

8. Vorrichtung nach einem der Ansprüche 1 bis 7, dadurch gekennzeichnet, daß der Schließteil (2) außer der Halteaufnahme (16) für endgültige Positionierung des Bandes (3) eine Halteaufnahme (17) für die vorläufige Positionierung aufweist.

## Claims

1. An apparatus for binding elongate articles, having a fastening member (1) for fastening the apparatus to a mounting surface (4), which member has a vertical axis (9) disposed perpendicularly to the mounting surface (4), a strap (3) securely connected to the fastening member on one side thereof and a closure member (2) which is securely connected to the fastening member (1) on the other side thereof and which serves to retain the free of the strap (3) placed around the article to be bound, wherein the strap comprises a plurality of similar, resilient strap links (6) which are flexible in longitudinal direction and which have between two tranverse webs (11) at least one strand element (10) transmitting the longitudinal forces, and wherein the closure member (2) extends elongated obliquely upwards away from the vertical axis of the fastening member (1) and in the plane common to the fastening member, the strap and the closure member it is of a transverse dimension such that a strap link can be slipped thereover under elastic expansion and it has on its underside a retaining recess (16) for a transverse web (11) of a slipped-over strap link (6), the distance of which recess from the free end of the closure member being greater than the unobstructed width of the strap link, characterised in that on that side of the closure member (2) opposite the retaining recess (16) there is provided a locking recess (20) for a second transverse web (11') of the slipped-over strap link, which recess is spaced apart from the retaining recess (16) approximately as far as the two transverse webs (11, 11') from one another and which supports the transverse web (11') situated therein with respect to a force acting on the strap in a direction (21) which extends from that side of the fastening member (1) to which the strap (3) is fastened to the side on which the closure member (2) is fastened.

2. An apparatus according to Claim 1, characterised in that the locking recess (20) has a surface (13) which cooperates with the transverse web (11') and which extends parallel to the vertical axis (9) of the fastening member (1).

3. An apparatus according to Claim 1 or 2, characterised in that each strand element (10) of the strap links (6) has at least partly a course deviating from the longitudinal direction and each extends freely under longitudinal forces as a result of bending.

4. An apparatus according to any one of Claims 1 to 3, characterised in that the strap links (6) have two symmetrical strand elements (10).

5. An apparatus according to Claim 4, characterised in that the strap links (6) are circular to rhombus-shaped.

6. An apparatus according to Claim 5, characterised in that the strap links (6) have a longer transverse dimension than longitudinal dimension.

7. An apparatus according to Claim 4, characterised in that the strap links (6) are triangular-shaped with strand elements (10) of the adjacent strap link engaging in the central zone of the transverse web (12) of a strap link (6).

8. An apparatus according to any one of Claims 1 to 7, characterised in that, in addition to the retaining recess (16) for final positioning of the strap (3), the closure member (2) has a retaining recess (17) for temporary positioning.

## Revendications

1. Dispositif pour ligaturer des objets allongés, comportant, pour la fixation du dispositif sur une surface de montage (4), un élément de fixation (1) qui présente un axe vertical (9) à peu prés perpendiculaire à la surface de montage (4), une bande (3) jointe à l'élément de fixation d'un côté de celui-ci et un élément de fermeture (2) joint à l'élément de fixation (1) de l'autre côté de celui-ci pour retenir l'extrémité libre de la bande (3) placée autour de l'objet à ligaturer, la bande comprenant une multiplicité de maillons de bande (6) similaires, élastiques et déformables en direction longitudinale, qui présentent, entre deux barrettes transversales (11), au moins un élément en cordon (10) transmettant les forces longitudinales, et l'élément de fermeture (2) s'étendant obliquement vers le haut sous forme allongée dans le sens de son éloignement de l'axe vertical (9) de l'élément de fixation (1) et ayant, dans le plan commun à l'élément de fixation, à la bande et à l'élément de fermeture, une dimension transversale telle qu'il puisse être enfilé dans un maillon de bande avec élargissement élastique de celui-ci, et présentant, du côté inférieur, un logement de maintien (16) pour une barrette transversale (11) d'un maillon de bande enfilé, logement dont la distance à l'extrémité libre de l'élément de fermeture est plus grande que le diamètre intérieur du maillon de bande, caractérisé en ce qu'il est prévu, du côté de l'élément de fermeture (2) opposé au logement de maintien (16), un logement de sécurité (20) pour la seconde barrette transversale (11') du maillon de bande enfilé, lequel logement est à peu prés éloigné du logement de maintien (16) de la même distance qu'entre les deux barrettes transversales (11, 11') et retient la barrette transversale (11') qui s'y trouve contre une force qui agit sur la bande dans une direction (21') qui s'étend depuis le côté de l'élément de fixation (1) auquel la bande (3) est fixée vers le côté auquel l'élément de fermeture (2) est fixé.

2. Dispositif selon la revendication 1, caractérisé en ce que le logement de sécurité (20) présente une surface (13) qui coopère avec la barrette transversale (11') et qui s'étend à peu près parallèlement à l'axe vertical (9) de l'élément de fixation (1).

3. Dispositif selon la revendication 1 ou 2, caractérisé en ce que l'élément en cordon (10) des maillons de bande (6) a, au moins en partie, un tracé qui s'écarte de la direction longitudinale et qui s'étire librement par flexion sous l'effet de forces longitudinales.

4. Dispositif selon l'une quelconque des revendications 1 à 3, caractérisé en ce que les maillons de bande (6) présentent deux éléments en cordon symétriques.

5. Dispositif selon la revendication 4, caractérisé en ce que les maillons de bande (6) sont réalisés sous forme circulaire ou losangique.

6. Dispositif selon la revendication 5, caractérisé en ce que les maillons de bande (6) présentent un axe transversal plus long que leur axe longitudinal.

7. Dispositif selon la revendication 4, caractérisé en ce que les maillons de bande (6) sont triangulaires avec des éléments en cordon (10) d'un maillon de bande (6) qui se raccordent à la partie médiane de la barrette transversale (12) du maillon de bande voisin.

8. Dispositif selon l'une quelconque des revendications 1 à 7, caractérisé en ce que l'élément de fermeture (2) présente, en dehors du logement de maintien (16) pour le positionnement définitif de la bande (3), un logement de maintien (17) pour son positionnement provisoire.
